# EUROPÄISCHE PATENTSCHRIFT

(11) **EP 0 747 146 B1**
(45) Veröffentlichungstag und Bekanntmachung des Hinweises auf die Patenterteilung: **06.05.1998**
(21) Anmeldenummer: 95108098.5
(22) Anmeldetag: 27.05.1995
(51) Int. Cl.: B21C 33/00

(54) **Vorrichtung zum Laden von Blöcken und gegebenenfalls Pressscheiben in liegende Metallstrangpressen**
Apparatus for loading billets and eventually pressing discs in horizontal metal-extrusion presses
Appareil pour le chargement des billettes et éventuellement des disques de poussée dans des presses horizontales d'extrusion de métaux

(43) Veröffentlichungstag der Anmeldung: 11.12.1996
(73) Patentinhaber: SMS Eumuco GmbH, 51377 Leverkusen (DE)
(72) Erfinder: Jakoby, Nikolaus, D-40880 Ratingen (DE)
(74) Vertreter: Pollmeier, Felix, Dipl.-Ing.

(56) Entgegenhaltungen:
- EP-A- 0 407 885
- EP-A- 0 574 592
- FR-A- 2 574 322
- PATENT ABSTRACTS OF JAPAN vol. 16 no. 576 (M-1345) ,16.Dezember 1992 & JP-A-04 224015 (UBE IND LTD) 13.August 1992,

## Beschreibung

Die in einer Metallstrangpresse zur Verpressung gelangenden Blöcke werden durch eine schalen- oder zangenartige Vorrichtung in die Preßachse eingebracht und dann in die Bohrung des Aufnehmers verbracht, d.h. eingeschoben, falls nicht der Aufnehmer über den Block gestülpt wird. Soweit das Einschieben des Blockes in die Aufnehmerbohrung nicht durch den Preß- oder Matrizenstempel oder einen Hilfsstößel erfolgt, ist der Ladeschale ein Schieber zuzuordnen und dieser Schieber wird vorzugsweise einschließlich seines Verschiebeantriebs im Tragarm der Ladeschale geführt und gelagert. Auf eine Ladevorrichtung der letztgenannten, beispielsweise aus der US-A-2 919 039 oder EP 0 574 592 B1 bekannten Bauart bezieht sich die Erfindung, wobei die Bauart der Ladevorrichtung wesentlichen Einfluß auf einen störungsfreien Ablauf des Preßvorgangs bei geringen Nebenzeiten und auf die Möglichkeit präziser Meßwerterfassungen zur Steuerung des Preßvorgangs hat.

In der Praxis durchgesetzt haben sich bisher vor allem die Ladevorrichtungen, deren Schieber als von einer Kolben-Zylinder-Einheit angetriebener Schwenkarm ausgebildet ist, wobei diese mit den Nachteilen behaftet sind, daß der Angriffspunkt des Schiebers am Block wandert, daß sie entsprechend sperrig bauen und träge arbeiten und daß sie zur unmittelbaren Meßwerterfassung wenig geeignet sind. Andere Schieberausbildungen erwiesen sich wegen ihres Raumbedarfs, der erreichbaren Präzision und Geschwindigkeit des Blockeinschubs und ihrer geringeren Betriebszuverlässigkeit als weniger geeignet.

Ziel der Erfindung ist es eine Vorrichtung zum Laden von Blöcken und gegebenenfalls von Preßscheiben in liegende Metallstrangpressen nach dem Oberbegriff des Patentanspruchs 1 hinsichtlich ihrer Betriebssicherheit, ihres Raumbedarfs, ihrer Arbeitsgeschwindigkeit und in der Präzision ihrer Arbeitsweise und der damit verbundenen Möglichkeit von Meßwerterfassungen zu verbessern. Hierzu ist erfindungsgemäß vorgesehen, daß als Schieber ein mit einem bis in die Preßachse reichenden Ausleger versehener, in Führungsschienen parallel zur Preßachse verfahrbarer Wagen vorgesehen ist, dessen Führungsschienen zu einem mit Lagern für ein Antriebs-, ein Umlenk- und ein Spannrad eines Kettentriebs versehenen Teil der Ladeschale verbunden sind, daß der Kettentrieb aus einer mit dem Wagen verbundenen Treibkette von einer das 3- bis 9-fache der Teilung betragender Breite besteht, die reversierend angetrieben, den Wagen zwischen einer Ausgangsstellung, in der sich sein Ausleger außerhalb der Blockbahn befindet, und einer Endstellung, in der sich die Auslegervorderkante bündig mit der aufnehmerseitigen Stirnfläche der Ladeschale befindet, bewegt, und daß eine der zwischen den Führungsschienen des Wagens und der unteren Blockstütze liegenden Hälften der Ladeschale zur seitlichen Öffnung beim Ausbringen der Ladeschale schwenkbar ist.

Als Antrieb für den Wagen wird gemäß einem weiteren Merkmal der Erfindung ein hydrostatischer Antrieb, beispielsweise ein Radialkolbenmotor vorgesehen, da ein hydrostatischer Antriebsmotor hohe Leistung bei geringen Abmessungen aufweist und Stoßbelastungen dämpft.

Zur Verkürzung von Nebenzeiten und zur Störfallbehebung ist die Ladeschale erfindungsgemäß so ausgebildet, daß sie zu einer Seite hin hälftig geöffnet werden kann. Eine weitere Verbesserung der Zugänglichkeit wird erreicht, wenn gemäß einem weiteren Merkmal der Erfindung der obere, die Führungsschienen für den Schieberwagen und den Kettentrieb zusammenfassende Teil der Ladeschale um eine parallel zu ihrer eigenen Achse angeordnete Achse zur Öffnung der Ladeschale nach oben schwenkbar ist.

Die Zeichnungen zeigen Ausführungsbeispiele der Erfindung.
- Figur 1a zeigt: eine Strangpresse im Schnitt, in dem eine horizontal ein- und ausfahrbare Ladevorrichtung in Seitenansicht zu sehen ist, und
- Figur 1b: zeigt eine Strangpresse im Schnitt, in dem eine ein- und ausschwenkbare Ladevorrichtung in Seitenansicht zu sehen ist.
Eine an den Tragarm der Ladevorrichtung nach Fig. 1a angesetzte Ladeschale ist in
- Figur 2: in einer vom Tragarm der Ladevorrichtung aus gesehenen Seitenansicht, in
- Figur 3: in gleicher Sicht, jedoch in der oberen Hälfte durch einen in der senkrechten, die Pressenachse einschließenden Ebene geführten Schnitt geöffnet, in
- Figur 4a: einer teilweise, (nach der in Figur 3 eingetragenen Schnittlinie IV-IV geschnittenen Stirnansicht, in
- Figur 4b: in einer gleichen Stirnansicht bei einem ausgeschwenkten Ladeschalenteil, in
- Figur 5: in einem Schnitt nach der in Figur 3 eingetragenen Schnittlinie V-V (nur oberer Teil) und in
- Figur 6: in einem Schnitt nach der in Figur 3 eingetragenen Schnittlinie VI-VI dargestellt.
Als Detail ist der Schieber (Wagen mit Ausleger) in größerem Maßstab in
- Figur 7a: in Seitenansicht, in
- Figur 7b: in einem Schnitt nach der in Fig. 7a eingetragenen Schnittlinie b-b, in
- Figur 7c: in einem Schnitt nach der in Fig. 7a eingetragenen Schnittlinie c-c, und in
- Figur 7d: im Ausschnitt eines Schnitts auch der in Fig. 7a eingetragenen Schnittlinie d-d dargestellt. Eine Abwandlung der Ausführung ist als Detail in
- Figur 8a: in einer Seitenansicht und in
- Figur 8b: in Aufsicht dargestellt.

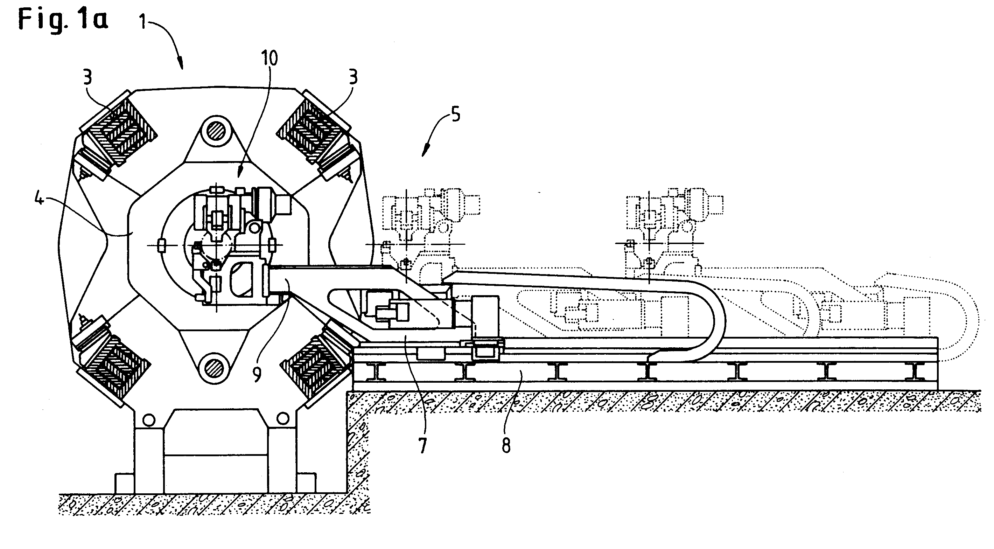

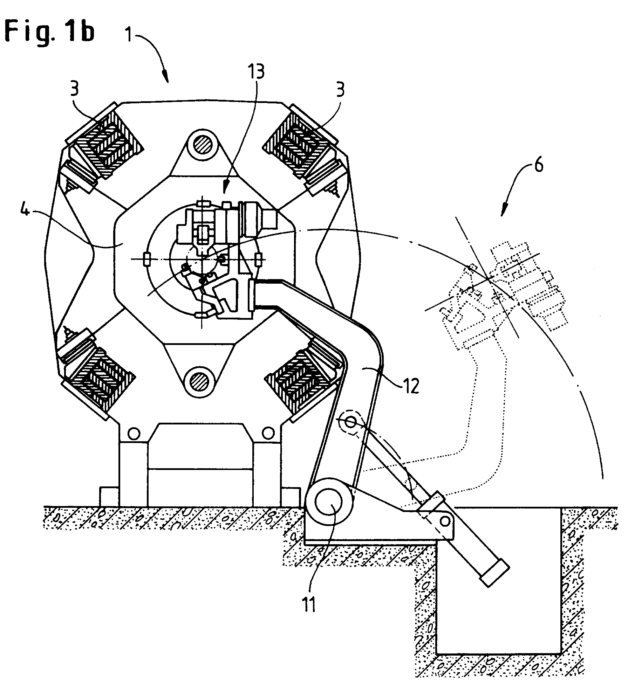

Einer in den Figuren 1a und 1b dargestellten Strangpresse 1 bekannter Ausbildung - in der Schnittdarstellung erkennbar sind der Gegenholm 2, die vorgespannten Zuganker 3 und der Aufnehmerhalter 4 - sind eine horizontal ein- und ausfahrbare Ladevorrichtung 5 beim Ausführungsbeispiel nach Fig. 1a bzw. eine ein- und ausschwenkbare Ladevorrichtung 6 beim Ausführungsbeispiel nach Fig. 1b zugeordnet.

Die horizontal ein- und ausfahrbare Ladevorrichtung 5 im Ausführungsbeispiel nach Fig. 1a besteht aus einem Schlitten 7, der auf einem Bett 8 verfahrbar ist und an einem Arm 9 eine Ladeschale 10 trägt. In der einen, in der Fig. 1a ausgezogenen dargestellten Stellung befindet sich der Schlitten 7 in der einen Endstellung, in der sich die Ladeschale 10 in der Pressenachse befindet. In einer zweiten, in Fig. 1a punktiert dargestellten Stellung befindet sich der Schlitten 7 in der anderen Endstellung, in der sich die Ladeschale 10 in der Ofenachse befindet. Eine Zwischenstellung ist vorgesehen als Wartestellung und/oder für die Berußung der Blockstirnfläche, für die Inspektion des Blockes, das Einfahren des Schiebers für den Blockvorschub, das Feststellen der jeweiligen Blocklänge und dergleichen Hilfsoperationen.

Die ein- und ausschwenkbare Ladevorrichtung im Ausführungsbeispiel nach Fig. 1b besteht aus einem um eine Achse 11 schwenkbaren Arm 12, der eine Ladeschale 13 trägt. In der einen, in Fig. 1b ausgezogen dargestellten Stellung befindet sich der Schwenkarm 12 in der einen Endstellung, in der sich die Ladeschale 13 in der Pressenachse befindet. In der zweiten, in Fig. 1b punktiert dargestellten Stellung befindet sich der Schwenkarm 12 in der anderen Endstellung, in der sich die Ladeschale in der Ofenachse befindet. Der Schwenkarm 12 mit seiner Ladeschale 13 kann bedarfsweise zum Halt in einer Zwischenstellung ausgerüstet sein.

Die Ladeschalen 10 und 13 sind von grundsätzlich gleichem Aufbau und lediglich der unterschiedlichen Bewegungsbahn - gradlinig nach Fig. 1a, kreisbogenförmig nach Fig. 1b - angepaßt.

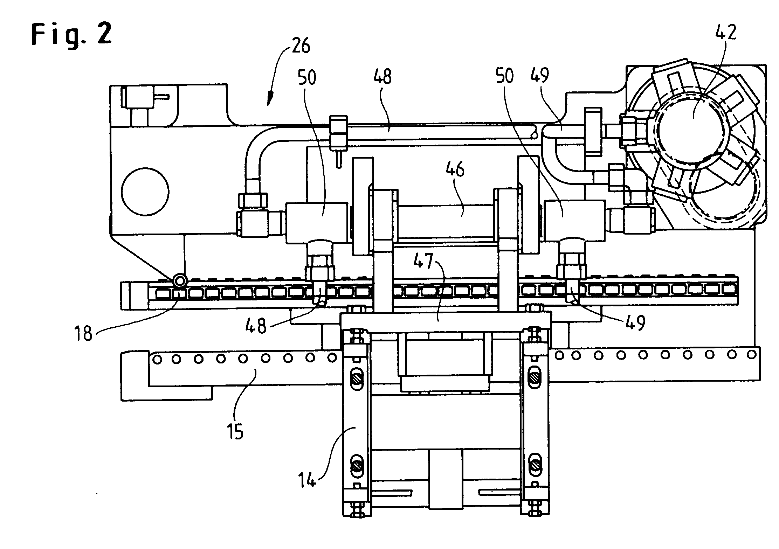

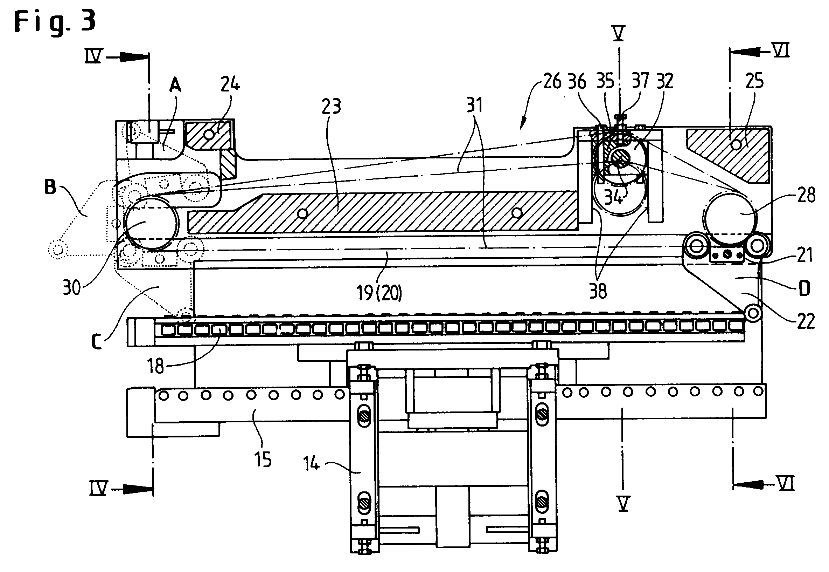

Aus den Figuren 2 bis 6 ist der Aufbau einer Ladeschale 10 ersichtlich. Diese besteht aus einem an den Arm 9 angesetztem und mit diesem lösbar verbundenen Träger 14, der Rollenbahn 15 als untere Stütze für einen von der Ladeschale 10 zu transportierenden Block 16, einer seitlichen Stütze 17 und einer Rollenbahn 18 als zweiter seitlicher Stütze. Den oberen Abschluß der Ladeschale 10 bilden Führungsschienen 19 und 20 für einen aus einem Wagen 21 mit Ausleger 22 bestehenden Schieber für den Vorschub des Blocks 16. Die Führungsschienen 19 und 20 sind durch Stege 23, 24 und 25 zu einem Lagerkörper 26 verbunden, in welchem in Lagern 27 ein Antriebskettenrad 28 und in Lagern 29 ein Umlenkrad 30 für eine den Wagen 21 bewegende Kette 31 gelagert sind. Gespannt ist die Kette 31 von einem Spannrad 32, welches mit Lagern 33 von einer Achse 34 getragen ist, die von Gleitstücken 35 getragen ist, wobei die Gleitstücke 35 durch Stellschrauben 36 und Konterschrauben 37 in Gleitbahnen 38 ein und feststellbar sind. Das Antriebskettenrad 28 ist von einer Welle 39 getragen und durch diese mit einem Ritzel 40 drehfest verbunden, welches mit einem Ritzel 41 auf der Abtriebswelle eines Hydromotors 42 in Eingriff steht. Wie aus der Fig. 3 ersichtlich, wird der Wagen 21 durch den reversierenden Hydromotor 42 zwischen seiner punktiert dargestellten Ausgangsstellung A über dem Umlenkrad 30, über ebenfalls punktiert dargestellte Zwischenstellungen B und C, und seiner Endstellung D unter dem Antriebskettenrad 28 hin- und herbewegt.

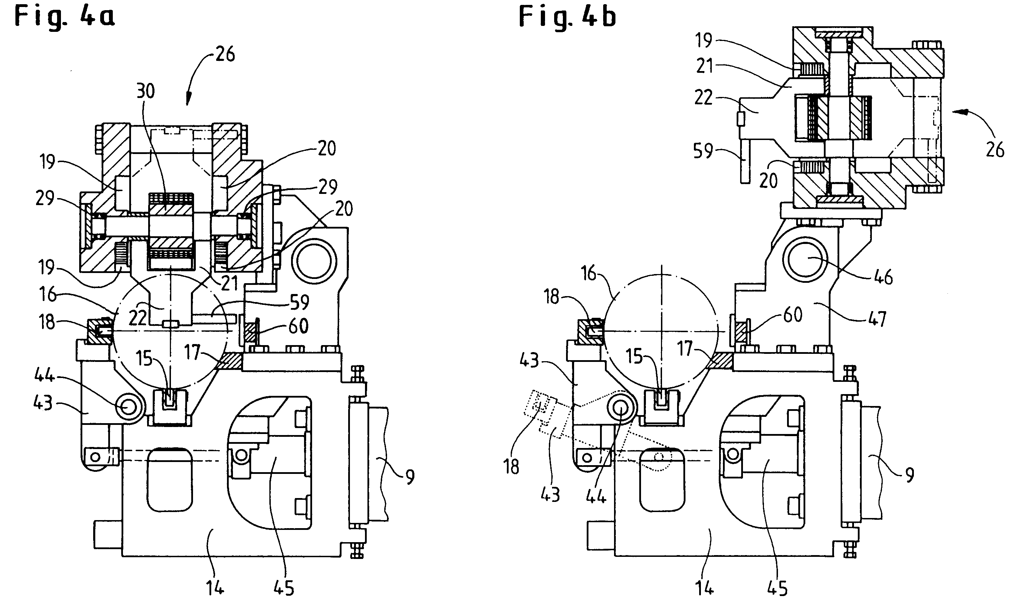

Wie aus den Fig. 4a und 4b ersichtlich, ist die Rollenbahn 15 höhenverstellbar und parallel zur Pressenachse ausrichtbar mit dem Träger 14 verbunden. Die seitliche Stütze 17 ist mit dem Träger 14 lösbar, somit einstellbar und auswechselbar verbunden.

Die Rollenbahn 18 ist durch Schwenkhebel 43 mit dem Träger 14 verbunden, wobei die Schwenkhebel 43 um Achsen 44 mittels der Kolben-Zylinder-Einheiten 45 ein- und ausschwenkbar sind und damit die Ladeschale 10 seitlich zu öffnen ist, um beispielsweise mit dem Preßstempel zwecks Abkürzung von Nebenzeiten dem Schieber in die Ladeschale 10 nachzufahren oder beim Steckenbleiben eines noch nicht voll in die Aufnehmerbohrung eingebrachten Blocks. Damit im Störungsfall die Ladeschale 10 nicht nur seitlich, sondern weiter geöffnet werden kann, ist der mit den Führungsschienen 19 und 20 versehene Lagerkörper 26 um eine Achse 46 in einer Konsole 47 zum Träger 14 schwenkbar. Die Leitungen 48 und 49 zum Hydromotor 42 sind hierzu mit Drehkupplungen 50 in der Achse 46 versehen,, wie aus der Fig. 2 zu ersehen ist.

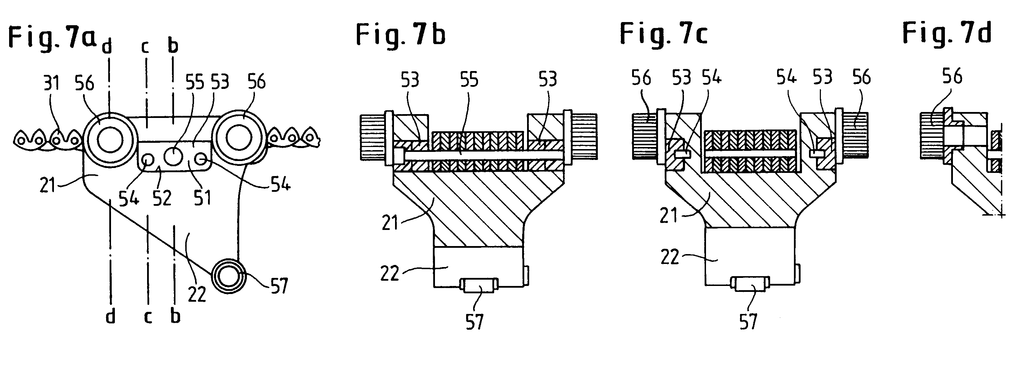

In den Fig. 7a bis 7d ist der Wagen 21 mit seinem Ausleger 22 und der mit ihm verbundenen Zahnkette 31 dargestellt. Zur Verbindung der Zahnkette 31 mit dem Wagen 21 ist eine Reihe der nebeneinanderliegenden Zahnkettenglieder mit Laschen 51 versehen, die in einer Nute 52 im Wagen 21 sitzen. Zu beiden Seiten der Laschen 51 ist ein Riegelstück 53 aufgesetzt. Die Riegelstücke 53 sitzen in der an den Enden erweiterten Nute 52 ein und sind dort durch Stifte 54 arretiert. Durch eine Schraube 55 sind die Laschen 51 der Zahnkettenglieder und die Riegelstücke 53 zusammengefaßt und mit dem Wagen 21 verbunden. Der Wagen 21 ist mit Rädern 56 versehen, die in den Führungsschienen 19 und 20 des Lagerkörpers 26 laufen. Mit 57 ist eine Druckrolle im Ausleger 22 bezeichnet, mit der sich der Ausleger 22 an den Block 16 anlegt.

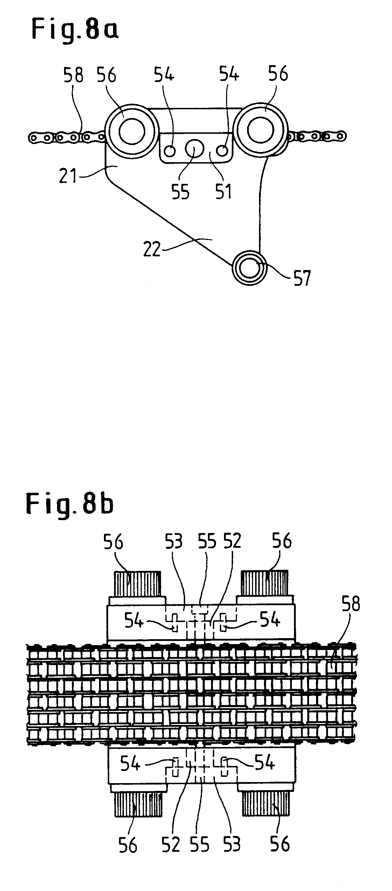

Die Fig. 8a und 8b zeigen eine 6-fach-Gelenkkette 58 anstelle einer Zahnkette 31 bei im übrigen gleicher Ausbildung der Verbindung mit dem Wagen 21.

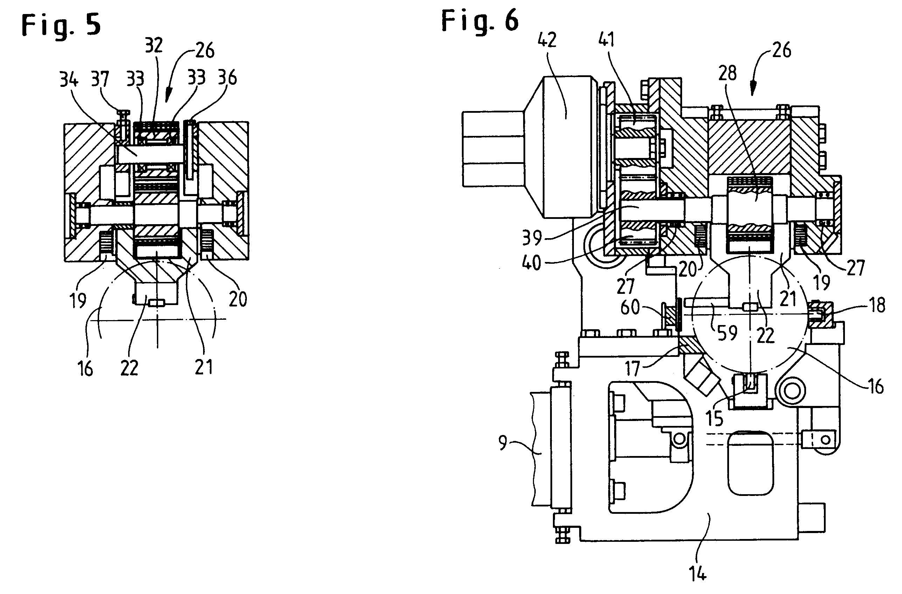

Die Meßwerterfassung kann direkt und/oder indirekt, absolut und/oder inkremental erfolgen. Vorgesehen dazu sind ein mit der Welle des Antriebsmotors 42 gekoppelter Drehwertgeber, eine Messung des Öldrucks bzw. der Druckdifferenz bei Verwendung eines Hydraulikmotors oder der Stromstärke bei Verwendung eines Elektromotors als Antriebsmotor 42, und - wie die Fig. 4a, 4b und 6 zeigen - ein mit dem Wagen 21 verbundener Arm 59, der zusammenwirkt mit Positionsabzeigern oder Weggebern an einem über die Konsole 47 mit dem Träger 14 verbundenen Balken 60.

Die Reaktionskraft zu der zum Einschieben eines Blocks 16 am Schieber benötigten Kraft wird von dem Arm 9, dem Schlitten 7 und dem Bett 8 (Ausführungsbeispiel nach Fig. 1a) bzw. von dem Schwenkarm 12 und dessen Lagerung mit der Achse 11 (Ausführungsbeispiel nach Fig. 1b) aufgenommen. Eine übermäßige Beanspruchung dieser Bauteile im Störungsfall, beispielsweise einem in der Aufnehmerbohrung klemmenden Block 16, ist ausgeschlossen, da die Einschubkraft durch Messung des Öldrucks bzw. der Druckdifferenz am Motor 42 überwacht und begrenzt ist. Die Überwachung und Begrenzung der Einschubkraft ist in jedem Fall vorzusehen, um eine starke Einklemmung eines Blocks 16 und eine "Pilzbildung" am Blockteil außerhalb des Aufnehmers auszuschließen, selbst wenn die Aufnahme der Reaktionskraft innerhalb der Presse erfolgt, wie dies in nicht dargestellten Abwandlungen der Ausführungsbeispiele vorgesehen sein kann. So ist es möglich, die Ladeschale 10 bzw. 13 an dem Laufholm der Presse abzustützen oder durch ein Klammerteil mit Gegenstück an Aufnehmerhalter 4 und Ladeschale 10 bzw. 13 an den Aufnehmerhalter 14 zugfest anzuhängen. Ferner sind Verriegelungen gegenüber dem Pressenrahmen möglich, die - wenn sie die Reaktionskraft nicht unmittelbar aufnehmen - einen Stützpunkt näher der Reaktionskraftlinie ergeben.

## Patentansprüche

1. Vorrichtung zum Laden von Blöcken (16) und gegebenenfalls Preßscheiben in eine liegende Metallstrangpresse (1), bestehend aus einer von einem beweglichen Arm (9, 12) getragenen Ladeschale (10,13), mit der ein zu verpressender Block (16) von einer Ladestation in die Preßachse zwischen Aufnehmer und Matrize, Preßstempel bzw. Matrizenstempel einbringbar ist, und einem den Block (16) in die Aufnehmerbohrung einschiebenden und einschließlich seines Verschiebeantriebs im Tragarm (9, 12) gelagerten Schieber,
**dadurch gekennzeichnet,**
daß als Schieber ein mit einem bis in die Preßachse reichenden Ausleger (22) versehener, in Führungsschienen (19, 20) parallel zur Preßachse verfahrbarer Wagen (21) vorgesehen ist, dessen Führungsschienen (19, 20) zu einem mit Lagern für ein Antriebs- (28), ein Umlenk- (30) und ein Spannrad (32) eines Kettentriebs versehenen Teil (26) der Ladeschale (10, 13) verbunden sind, daß der Kettentrieb aus einer mit dem Wagen (21) verbundenen Treibkette (31, 58) von einer das 3- bis 9-fache der Teilung betragender Breite besteht, die reversierend angetrieben (42), den Wagen (21) zwischen einer Ausgangsstellung (A), in der sich sein Ausleger (22) außerhalb der Blockbahn befindet, und einer Endstellung (D), in der sich die Auslegervorderkante bündig mit der aufnehmerseitigen Stirnfläche (10, 15) befindet, bewegt, und daß eine der zwischen den Führungsschienen (19, 20) des Wagens (21) und der unteren Blockstütze (15) liegenden Hälfte der Ladeschale (10, 13) zur seitlichen Öffnung beim Ausbringen der Ladeschale (10, 13) schwenkbar ist.

2. Blockladevorrichtung nach Anspruch 1,
**dadurch gekennzeichnet,**
daß der Kettentrieb für die Schieberbewegung mit einem hydrostatischen, in der Drehrichtung umkehrbaren Antrieb (42), beispielsweise einem Radialkolbenmotor versehen ist.

3. Blockladevorrichtung nach Anspruch 1 oder 2,
**dadurch gekennzeichnet,**
daß der obere, die Führungsschienen (19, 20) für den Schieberwagen und den Kettentrieb zusammenfassende obere Teil (26) der Ladeschale (10, 13) um eine parallel zu ihrer eigenen Achse angeordnete Achse (46) zur Öffnung der Ladeschale (10, 13) nach oben schwenkbar ist.

## Claims

1. Apparatus for loading billets (16) and, if necessary, pressing discs into a horizontal metal extrusion press (1), comprising a loading shell (10, 13) which is carried by a movable arm (9, 12) and with which a billet (16) to be extruded can be brought from a loading station into line with the extrusion axis between container and die, extrusion stem or die stem, and a pusher which pushes the billet (16) into the container bore and is mounted, together with its displacement drive, in the carrying arm (9, 12), characterised in that a carriage (21) which is equipped with an extension (22) reaching into the extrusion axis and is movable in guide rails (19, 20) parallel to the extrusion axis is provided as the pusher, the guide rails (19, 20) of which carriage are connected to form a part (26) of the loading shell (10, 13), which part is equipped with bearings for a drive wheel (28), a deflection wheel (30) and a tension wheel (32) of a chain drive, in that the chain drive comprises a driving chain (31, 58) which is connected to the carriage (21) and is of a width amounting to 3- to 9-times the pitch, and which, when driven in reversing manner (42), moves the carriage (21) between a starting position (A) in which its extension (22) is outside the billet path and an end position (D) in which the front edge of the extension is flush with the container-side end face (10, 15), and in that one of the halves, lying between the guide rails (19, 20) of the carriage (21) and the lower billet support (15), of the loading shell (10, 13) is swivellable for lateral opening on bringing out the loading shell (10, 13).

2. Billet loading apparatus according to Claim 1, characterised in that the chain drive for the pusher movement is equipped with a hydrostatic drive (42) reversible in the direction of rotation, for example a radial piston engine.

3. Billet loading apparatus according to Claim 1 or 2, characterised in that the upper part (26), combining the guide rails (19, 20) for the pusher carriage and the chain drive, of the loading shell (10, 13) is swivellable upwards about an axis (46) arranged parallel to the loading shell's own axis to open the said loading shell (10, 13).

## Revendications

1. Dispositif pour le chargement de billettes (16) et éventuellement de grains de poussée dans une presse à filer les métaux horizontale (1), composé d'un berceau de chargement (10, 13) porté par un bras mobile (9, 12) au moyen duquel une billette (16) qu'il s'agit de filer peut être placée dans l'axe de la presse à partir d'un poste de chargement, et un poussoir servant à emmancher la billette (16) dans l'alésage du conteneur et qui est monté, avec son entraînement de translation dans le bras porteur (9, 12), caractérisé
en ce qu'il est prévu comme poussoir, un chariot (21) muni d'une flèche (22) s'étendant jusque dans l'axe de la presse, et qui peut se déplacer sur des rails de guidage (19, 20) parallèlement à l'axe de la presse, et dont les rails de guidage (19, 20) sont reliés à une partie (26) du berceau de chargement (10, 13) qui est munie de paliers pour recevoir une roue d'entraînement (28), une roue de renvoi (30) et une roue de tension (32) d'un entraînement à chaîne, en ce que l'entraînement à chaîne est composé d'une chaîne d'entraînement (31, 58) solidaire du chariot (21), d'une largeur qui vaut de 3 à 9 fois le pas, qui, entraînée de façon réversible (42), déplace le chariot (21) entre une position de départ (A) dans laquelle sa flèche (22) se trouve en dehors de la voie de la billette, et une position finale (D) dans laquelle le bord avant de la flèche est aligné sur la surface frontale (10, 15) côté conteneur et en ce que l'une des moitiés du berceau de chargement (10, 13) qui se trouve entre les rails de guidage (19, 20) du chariot (21) et le soutien de billette inférieur (15) peut pivoter vers l'ouverture latérale lors de l'extraction du berceau de chargement (10, 13).

2. Dispositif de chargement de billettes selon la revendication 1,
caractérisé
en ce que l'entraînement à chaîne pour le déplacement du poussoir est équipé d'un entraînement hydrostatique (42) réversible en sens de rotation, par exemple d'un moteur à piston radiaux.

3. Dispositif de chargement de billettes selon la revendication 1 ou 2,
caractérisé
en ce que la partie supérieure (26) du berceau de chargement (10, 13), qui rassemble les rails de guidage (19, 20) prévus pour le chariot du poussoir et l'entraînement à chaîne, peut être relevée par pivotement autour d'un axe (46) disposé parallèlement à son propre axe pour ouvrir le berceau de chargement (10, 13).
